# EUROPÄISCHE PATENTSCHRIFT

(11) **EP 0 643 107 B1**
(45) Veröffentlichungstag und Bekanntmachung des Hinweises auf die Patenterteilung: **30.05.2001**
(21) Anmeldenummer: 94112947.0
(22) Anmeldetag: 19.08.1994
(51) Int. Cl.: C09B 29/08, C09B 67/22, D06P 3/54, D06P 3/82

(54) **Verfahren zum Färben von Polyester und polyesterhaltigen Textilmaterialien**
Dyeing process of polyester and polyester-containing textiles
Procédé de teinture du polyester et des matériaux textile le contenant

(30) Priorität: 11.09.1993 DE 4330843
(43) Veröffentlichungstag der Anmeldung: 15.03.1995
(73) Patentinhaber: DyStar Textilfarben GmbH & Co. Deutschland KG, 60318 Frankfurt am Main (DE)
(72) Erfinder: Bühler, Ulrich, Dr., D-63755 Alzenau (DE)

(56) Entgegenhaltungen:
- EP-A- 0 078 006
- EP-A- 0 540 936
- FR-A- 2 388 861
- CHEMICAL ABSTRACTS, vol. 81, no. 8, 26. August 1974, Columbus, Ohio, US; abstract no. 38934t, H. AIGA 'Azo dyes' Seite 87 ;Spalte 2 ; & JP-A-49 013 479 (MITSUI TOATSU CHEMICALS INC.) 5. Februar 1974
- CHEMICAL ABSTRACTS, vol. 114, no. 17, 29. April 1991, Columbus, Ohio, US; abstract no. 166285u, J. JABLONSKY ET. AL. 'Azo dye mixtures for coloring polyester fibers navy blue' Seite 107 ;Spalte 2 ; & PL-A-148 426 (OSRODEK B.-R. P. BARWNIKOW "ORGANIKA") 31. Januar 1990

## Beschreibung

Die vorliegende Erfindung betrifft ein Verfahren zum Färben von textilem Polyester oder polyesterhaltigen Textilmaterialien mit marineblauen Aminoazofarbstoffen.

In der Regel werden textiles Polyester oder polyesterhaltige Textilmaterialien mit Dispersionsfarbstoffen aus wäßrigem Färbebad bei HT-Bedingungen in einem Temperaturbereich von 120 bis 140°C bei pH-Werten von 4 bis 6 gefärbt, da bei höheren pH-Werten die Dispersionsfarbstoffe teilweise oder ganz zerstört werden. Bei höheren pH-Werten kommt es somit zu Farbstärkeverlusten und Farbtonabweichungen beim Färben und die Färbungen sind nicht reproduzierbar. Nun wird normalerweise die Polyesterfaser in einem separaten Schritt vor dem Färben einer alkalischen Spülbehandlung unterworfen, um Hilfsmittel, die beim Weben oder Spinnen der Faser eingesetzt worden sind, zu entfernen. Diese Hilfsmittel sind z.B. Ölungs- oder Schlichtemittel, die bei ihrem Vorhandensein ein egales Anfärben der Polyesterfaser erschweren oder unmöglich machen würden. Die alkalische Behandlung wird auch durchgeführt, um Oligomere der Polyesterfaser, die beim Färbevorgang aus dem Faserinneren herausgetreten sind und die Färbung unegal erscheinen lassen, zu zerstören und in der wäßrigen Färbeflotte zu halten. Die genannten Oligomere sind insbesondere beim Garnfärben unerwünscht, da sie sich beim Spinnen der gefärbten Garne in den Spinnapparaten an den Stellen, wo das Garn umgelenkt wird, durch Abrieb pulverartig absetzen. Sie verschmutzen so die Apparatur und führen dazu, daß das Garn reißt.

Diese alkalische Spülbehandlung wird zweckmäßigerweise bei erhöhter Temperatur durchgeführt. Um Zeit und Energie zu sparen und um die Anzahl der für beide Prozesse, alkalische Vorbehandlung und Färben, benötigten Apparate zu reduzieren, war es schon immer das Ziel, beide Prozesse zu einem Ein-Bad-Spül- und Färbeverfahren zu vereinigen. Zur Realisierung dieses Zieles müssen allerdings Verfahren entwickelt werden, die im wäßrigen Färbebad bei pH 8 bis pH 11 reproduzierbare Färbungen ergeben.

Polyester-Zellulose- bzw. Polyester-Polyamid-Mischgewebe werden mit Dispersions- bzw. Reaktivfarbstoffen aus wäßrigem Färbebad in der Regel in zwei Färbeschritten gefärbt. Wie oben erwähnt, werden dabei die Dispersionsfarbstoffe auf den Polyesteranteil bei pH 4 bis 6 appliziert, die Reaktivfarbstoffe auf den Zellulose- bzw. Polyamid-Anteil im pH-Bereich zwischen pH 11 und 13. Auch hier war es in der Vergangenheit das Ziel, ein einbadiges Applikationsverfahren für beide Farbstoffklassen zu entwickeln. Hierfür hat man nach Reaktivfarbstoffen gesucht, die bereits bei pH-Werten zwischen 8 und 11 gefärbt werden können, und es waren auch hier Verfahren erforderlich, die sicherstellen, daß unter diesen Bedingungen der Polyesteranteil mit Dispersionsfarbstoffen reproduzierbar gefärbt werden kann.

Zur Behandlung der Mängel bisheriger Verfahren wird in der DE-A 39 38 631 eine Methode beschrieben, bei der Dispersionsfarbstoffe im pH-Bereich zwischen pH 8 und 10 in Gegenwart mindestens einer, gegebenenfalls am Stickstoff substituierter Aminosäure und/oder eines Alkalimetallsalzes einer gegebenenfalls am Stickstoff substituierten Aminosäure gefärbt werden.

So können beispielsweise mit dieser Methode mit Farbstoffen der Formel 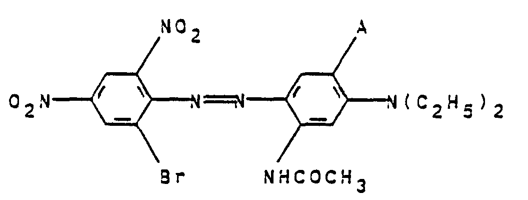 worin A Wasserstoff, Methoxy oder Ethoxy bedeutet, bei pH 9,5 befriedigende Färbungen erhalten werden. Die Alkalistabilität dieser Farbstoffe reicht aber für Färbungen bei höheren pH-Werten oder zur effektiven Durchführung der obengenannten Spülbehandlung nicht aus.

Aus der EP-A 540 936 sind bereits blaue Cyanazofarbstoffe bekannt, mit denen Polyester oder polyesterhaltige Fasermaterialien nach dem HT-Verfahren im pH-Bereich zwischen 8 und 11 gefärbt werden können. Diese Farbstoffe besitzen zwar eine hohe pH-Stabilität, ziehen jedoch beim Färben schlecht auf, so daß mit ihnen keine tiefen marineblauen Färbungen erhalten werden können. Außerdem zeigen diese Farbstoffe Mängel in der Egalität der Färbungen und in der Empfindlichkeit gegenüber Kupferionen, die im Färbereiwasser enthalten sein können. Darüber hinaus erfüllen sie im Hinblick auf ihre Gebrauchsechtheiten nicht alle Anforderungen.

Aufgabe der vorliegenden Erfindung ist es deshalb, alkalistabile Farbstoffe bereitzustellen, mit denen tiefe marineblaue Färbungen erhalten werden können und die ausreichende Gebrauchsechtheiten aufweisen.

Es wurde nun überraschenderweise gefunden, daß ausgewählte Aminoazofarbstoffe diese Aufgabe lösen. Diese Aminoazofarbstoffe sind teilweise bereits aus der DE-A 19 59 777, DE-A 28 18 653, DE-A 30 04 655, EP-A 38527 und EP-A 347 685 bekannt, allerdings ohne daß ihre besondere Eignung für die Alkalifärberei bekannt oder naheliegend gewesen wäre. Den genannten Aminoazofarbstoffen strukturell ähnliche Verbindungen sind außerdem aus der EP-A 78006 bekannt.

Die Erfindung betrifft somit ein Verfahren zum Färben von Polyester oder polyesterhaltigen Textilmaterialien bei pH 8 bis pH 11, dadurch gekennzeichnet, daß man einen oder mehrere Monoazofarbstoffe der allgemeinen Formel I 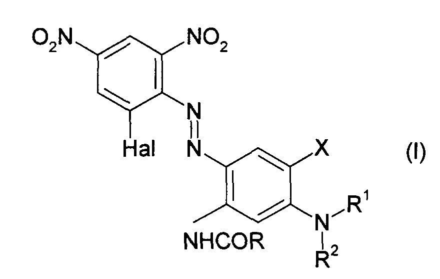
- Hal: einsetzt, worin Chlor oder Brom,
- R: (C₂-C₅)-Alkyl,
- X: Wasserstoff, Methoxy oder Ethoxy und
- R¹ und R²: Allyl
bedeuten.

Für R stehendes (C₂-C₅)-Alkyl kann geragkettig oder verzweigt sein und bedeutet beispielsweise Ethyl, n-Propyl, i-Propyl, n-Butyl, i-Butyl, sek.-Butyl, n-Pentyl, i-Pentyl oder sek.-Pentyl. Bevorzugt ist R (C₃-C₅)-Alkyl.

Bevorzugte erfindungsgemäß einzusetzende Farbstoffe der allgemeinen Formel 1 sind solche, in denen X Methoxy oder Ethoxy bedeutet.

Das erfindungsgemäße Verfahren kann mit einem Farbstoff der allgemeinen Formel I ausgeführt werden. Es kann aber auch mit zwei oder mehreren Farbstoffen der allgemeinen Formel I ausgeführt werden, wobei aber zwei oder drei Farbstoffe bevorzugt sind. Der Anteil eines Farbstoffes in diesen Fällen beträgt bevorzugt 5 bis 95 Gew.%, besonders bevorzugt 20 bis 70 Gew.%, jeweils bezogen auf die Gesamtfarbstoffmenge.

In bevorzugten erfindungsgemäß einzusetzenden Mischungen aus Farbstoffen der allgemeinen Formel I unterscheiden sich die einzelnen Farbstoffe nur in den Resten R.

Bevorzugt sind auch Mischungen die mindestens einen Farbstoff, in dem X für Wasserstoff steht und mindestens einen Farbstoff, in dem X für Methoxy oder Ethoxy steht, enthalten.

Besonders bevorzugte Mischungen enthalten einen bevorzugten Farbstoff der allgemeinen Formel I. Ganz besonders bevorzugte Mischungen enthalten zwei oder mehr bevorzugte Farbstoffe der allgemeinen Formel I.

Die vorliegende Erfindung betrifft weiterhin Monoazofarbstoffe der allgemeinen Formel I 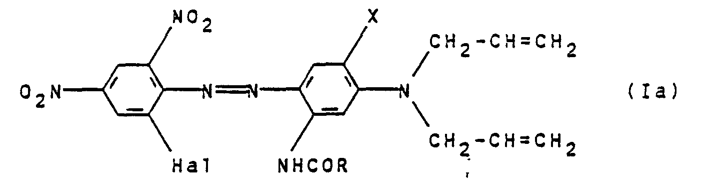 worin
- Hal: Chlor oder Brom,
- R: (C₃-C₅)-Alkyl und
- x: Wasserstoff, Methoxy oder Ethoxy bedeuten, sowie Mischungen dieser Farbstoffe.

In bevorzugten Farbstoffen der allgemeinen Formel Ia bedeutet X Methoxy oder Ethoxy.

In bevorzugten Mischungen aus Farbstoffen der allgemeinen Formel Ia unterscheiden sich die einzelnen Farbstoffe nur in der Bedeutung von Hal, R oder X, wobei in letzterem Falle X für Methoxy und Ethoxy steht.

Die Farbstoffe der allgemeinen Formel Ia können analog den in obengenanntem Stand der Technik beschriebenen Verfahren hergestellt werden. Insbesondere können sie dadurch hergestellt werden, daß ein Amin der allgemeinen Formel II 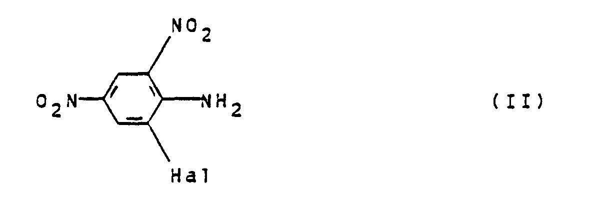 worin Hal wie oben angegeben definiert ist, in an sich bekannter Weise diazotiert und auf eine Verbindung der allgemeinen Formel III 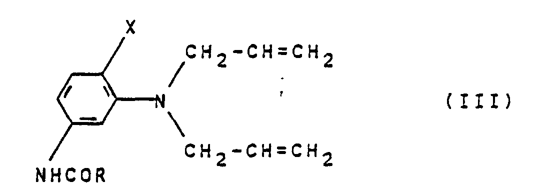 worin R und X wie oben angegeben definiert sind, gekuppelt wird.

Das erfindungsgemäße Verfahren wird bevorzugt unter HT-Bedingungen ausgeführt, d.h. in wäßriger Färbeflotte bei Temperaturen zwischen 120°C und 140°C in einem Färbeautoklaven. Der pH-Wert liegt bevorzugt bei pH 9 bis pH 10.

Die erfindungsgemäßen Farbstoffe der allgemeinen Formel Ia können nicht nur im erfindungsgemäßen Verfahren, sondern auch in anderen üblichen Verfahren zum Färben und Bedrucken von hydrophoben synthetischen Textilmaterialien, z.B. unter HT-Bedingungen im pH-Bereich zwischen 4 und 11 oder im sogenannten Thermosol-Prozess, eingesetzt werden oder aber nach einem Druckprozeß auf die Faser appliziert werden.

Die nach dem erfindungsgemäßen Verfahren zu färbenden Polyester sind insbesondere solche auf Basis von Polyethylenglykolterephthalaten. Polyesterhaltige Textilmaterialien sind z.B. Mischungen aus Polyester und Polyamiden.

Bei dem erfindungsgemäßen Verfahren werden die Farbstoffe oder Farbstoffmischungen in feiner Verteilung eingesetzt. Die Feinverteilung der Farbstoffe erfolgt in an sich bekannter Weise dadurch, daß man den in der Fabrikation anfallenden Farbstoff zusammen mit Dispergiermitteln in einem flüssigen Medium, vorzugsweise in Wasser, aufschlämmt und die Mischung der Einwirkung von Scherkräften aussetzt, wobei die ursprünglich vorhandenen Farbstoffteilchen mechanisch so weit zerkleinert werden, daß eine optimale spezifische Oberfläche erreicht wird und die Sedimentation des Farbstoffs möglichst gering ist. Die Teilchengrößen der Farbstoffe liegt im allgemeinen zwischen 0,5 und 5 µm, vorzugsweise bei etwa 1 µm.

Die bei dem Mahlvorgang mitverwendeten Dispergiermittel können nichtionogen oder anionaktiv sein. Nichtionogene Dispergiermittel sind z.B. Umsetzungsprodukte von Alkylenoxiden, wie z.B. Ethylen- oder Propylenoxid mit alkylierbaren Verbindungen, wie z.B. Fettalkoholen, Fettaminen, Fettsäuren, Phenolen, Alkylphenolen und Carbonsäureamiden. Anionaktive Dispergiermittel sind beispielsweise Ligninsulfonate, Alkyl- oder Alkylarylsulfonate oder Alkyl-aryl-polyglykolethersulfonate.

Die so erhaltenen Farbstoffzubereitungen sollen für die meisten Anwendungsweisen gießbar sein. Der Farbstoff- und Dispergiermittelgehalt ist daher in diesen Fällen limitiert. Im allgemeinen werden die Dispersionen auf einen Farbstoffgehalt bis zu 25 Gew.% und einen Dispergiermittelgehalt bis zu etwa 25 % eingestellt. Aus ökonomischen Gründen werden Farbstoffgehalte von 15 Gew.% meist nicht unterschritten.

Die Dispersionen können noch weitere Hilfsmittel enthalten, z.B. solche, die als Oxidationsmittel wirken, wie z.B. Natrium-m-nitrobenzolsulfonat oder fungicide Mittel, wie z.B. Natrium-o-phenyl-phenolat.

Für gewisse Anwendungsbereiche werden Pulvereinstellungen bevorzugt. Diese Pulver enthalten den Farbstoff oder das Farbstoffgemisch, Dispergiermittel und andere Hilfsmittel, wie z.B. Netz-, Oxydations-, Konservierungs- und Entstaubungsmittel.

Ein bevorzugtes Herstellungsverfahren für pulverförmige Farbstoffzubereitungen besteht darin, daß den oben beschriebenen flüssigen Farbstoff dispersionen die Flüssigkeit entzogen wird, z.B. durch Vakuumtrocknung, Gefriertrocknung, durch Trocknung auf Walzentrocknern, vorzugsweise aber durch Sprühtrocknung.

Zur Herstellung der Färbeflotten werden die erforderlichen Mengen der Farbstoffeinstellungen, die gemäß den obigen Angaben hergestellt wurden, mit dem Färbemedium, vorzugsweise mit Wasser, so weit verdünnt, daß sich für de Färbung ein Flottenverhältnis von 1 : 5 bis 1 : 50 ergibt. Zusätzlich werden den Flotten im allgemeinen weitere Färbereihilfsmittel, wie Dispergier-, Netz- und Fixierhilfsmittel zugesetzt.

Der erforderliche pH-Wert der Färbeflotte wird vor bzw. auch während des Färbens durch Zugabe von Basen wie Alkalihydroxiden, z.B. wäßriger Natronlauge, Alkalihydrogencarbonaten, z.B. Natriumhydrogencarbonat oder Alkalicarbonaten z.B. Soda, eingestellt.

Um pH-Schwankungen zu minimieren, werden vorzugsweise Puffersubstanzen zugesetzt, wie sie z.B. in JSDC 77 (1979), S. 47, oder JSDC 79 (1981), S. 115, beschrieben sind. Besonders geeignete Puffersubstanzen sind solche, die im pH-Bereich zwischen 9 und 11 die größte Pufferwirkung besitzen. Geeignete Puffersysteme sind z.B. Essigsäure/Natriumpyrophosphat, Borsäure/Borax, Natriumdihydrogenphosphat/Dinatriumhydrogenphosphat, Phosphorsäure/ Bernsteinsäure/Borsäure oder Kombinationen organischer Phosphorverbindungen mit Polycarbonsäuren. Die Einsatzmengen an Puffersystem liegen vorzugsweise zwischen 0,5 und 10 g/l.

Als Puffersubstanzen können auch die in der DE-A 39 38 631 beschriebenen Aminosäuren in der dort beschriebenen Weise eingesetzt werden.

### Beispiel 1

Durch Diazotierung von 26,2 g 2,4-Dinitro-6-bromanilin und Kupplung auf 31,4 g 5-i-Butyrylamino-2-methoxy-N,N-diallylanilin in Analogie zu den Angaben, wie sie in der DE-A 28 18 565 gemacht werden, erhält man 47,7 g eines Farbstoffs der Formel Ie 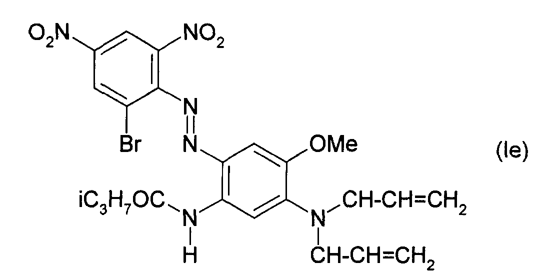 der sich in Aceton mit blauer Farbe löst, bei 133-136°C schmilzt und in Phthalsäuredimethylester bei 605 µm sein Absorptionsmaximum hat. Mit 30 g des so erhaltenen Farbstoffs, 30 g eines Dispergiermittels aus der Reihe der Ligninsulfonate und 90ml Wasser stellt man durch Vermahlen in einer Perlmühle eine feine Dispersion her.

4g der so erhaltenen Farbstoffdispersion werden in einem Färbeautoklaven aus einer Färbeflotte bestehend aus 2l Wasser, 2g eines Färbereihilfsmittels auf Basis Formaldehydkondensationsprodukt und 5g einer Puffersubstanz, die eine Mischung aus einer organischen Phosphorverbindung und einer Polycarbonsäure darstellt, 45 min bei 130°C auf 100 g Polyester gefärbt, nachdem vorher der pH-Wert der Färbeflotte auf 4,5 gestellt wurde. Danach wird die Färbung gespült, reduktiv gereinigt, sowie gespült und getrocknet. Man erhält bei guter Baderschöpfung eine tiefe marineblaue Färbung mit guten allgemeinen Echtheiten.

In der nachfolgenden Tabelle sind weitere Farbstoffe aufgeführt, die nach dem erfindungsgemäßen Verfahren eingesetzt werden können. 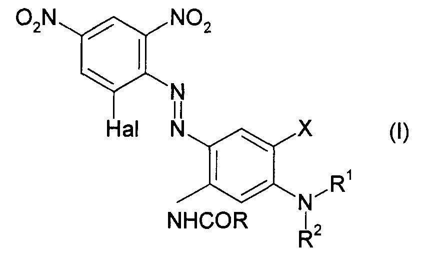
- 1 =: Violett
- 2 =: grünstichiges Marineblau
- 3 =: Marineblau
- 4 =: Rotviolett

| Hal | X | R | R¹ | R² | Nuance auf Polyester |
|---|---|---|---|---|---|
| Br | OCH₃ | C₂H₅ | CH₂CH=CH | CH₂CH=CH₂ | 3 |
| Br | OC₂H₅ | C₂H₅ | CH₂CH=CH | CH₂CH=CH₂ | 3 |
| Cl | OCH₃ | C₂H₅ | CH₂CH=CH | CH₂CH=CH₂ | 3 |
| Br | CCH₃ | nC₃H₇ | CH₂CH=CH | CH₂CH=CH₂ | 3 |
| Br | OC₂H₅ | nC₃H₇ | CH₂CH=CH | CH₂CH=CH₂ | 3 |
| Cl | OC₂H₅ | nC₃H₇ | CH₂CH=CH | CH₂CH=CH₂ | 3 |
| Br | OCH₃ | iC₃H₇ | CH₂CH=CH | CH₂CH=CH₂ | 3 |
| Cl | OCH₃ | iC₃H₇ | CH₂CH=CH | CH₂CH=CH₂ | 3 |
| Br | OCH₃ | nC₄H₉ | CH₂CH=CH | CH₂CH=CH₂ | 3 |
| Cl | OC₂H₅ | nC₄H₉ | CH₂CH=CH | CH₂CH=CH₂ | 3 |
| Cl | OCH₃ | nC₄H₉ | CH₂CH=CH | CH₂CH=CH₂ | 3 |
| Br | OCH₃ | CH(CE₃)C₂H₅ | CH₂CH=CH | CH₂CH=CH₂ | 3 |
| Cl | OCH₃ | CH(CH₃)C₂H₅ | CH₂CH=CH | CH₂CH=CH₂ | 3 |
| Br | OCH3 | CH₂CH(CH₃)₂ | CH₂CH=CH | CH₂CH=CH₂ | 3 |
| Cl | OC₂H₅ | CH₂CH(CH₃)₂ | CH₂CH=CH | CH₂CH=CH₂ | 3 |
| Br | OCH₃ | nC₅H₁₁ | CH₂CH=CH | CH₂CH=CH₂ | 3 |
| Br | OC₂H₅ | nC₅H₁₁ | CH₂CH=CH | CH₂CH=CH₂ | 3 |
| Cl | OCH₃ | nC₅H₁₁ | CH₂CH=CH | CH₂CH=CH₂ | 3 |
| Cl | OC₂H₅ | nC₅H₁₁ | CH₂CH=CH | CH₂CH=CH₂ | 3 |
| Br | OCH₃ | CH(C₂H₅)₂ | CH₂CH=CH | CH₂CH=CH₂ | 3 |
| Cl | OCH₃ | CH(C₂H₅)₂ | CH₂CH=CH | CH₂CH=CH₂ | 3 |
| Br | OC₂H₅ | CH(CH₃)nC₃H₇ | CH₂CH=CH | CH₂CH=CH₂ | 3 |
| Cl | OC₂H₅ | CH(CH₃)nC₃H₇ | CH₂CH=CH | CH₂CH=CH₂ | 3 |
| Br | H | C₂H₅ | CH₂CH=CH | CH₂CH=CH₂ | 4 |
| Cl | H | nC₃H₇ | CH₂CH=CH | CH₂CH=CH₂ | 4 |
| Br | H | nC₃H₇ | CH₂CH=CH | CH₂CH=CH₂ | 4 |
| Br | H | nC₄H₉ | CH₂CH=CH | CH₂CH=CH₂ | 4 |
| Cl | H | CH(CH₃)C₂H₅ | CH₂CH=CH | CH₂CH=CH₂ | 4 |
| Br | H | CH₂CH(CH₃)₂ | CH₂CH=CH | CH₂CH=CH₂ | 4 |
| Br | H | nC₅H₁₁ | CH₂CH=CH | CH₂CH=CH₂ | 4 |
| Cl | H | nC₅H₁₁ | CH₂CH₂=CH | CH₂CH=CH₂ | 4 |
| Br | H | CH(C₂H₅)₂ | CH₂CH=CH | CH₂CH=CH₂ | 4 |
| Cl | H | CH(CH₃)C₃H₇ | CH₂CH=CH | CH₂CH=CH₂ | 4 |

In der nachfolgenden Tabelle sind weitere Beispiele der erfindungsgemäß neuen Farbstoffe der allgemeinen Formel Ia aufgeführt:

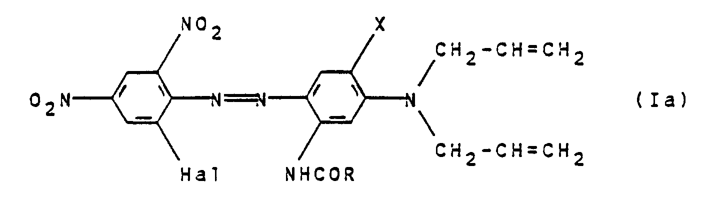

| Hal | X | R | Nuance auf Polyester |
|---|---|---|---|
| Br | OCH₃ | nC₃H₇ | 3 |
| Br | OC₂H₅ | iC₃H₇ | 3 |
| Br | OCH₃ | nC₄H₉ | 3 |
| Br | OC₂H₅ | nC₄H₉ | 3 |
| Br | OCH₃ | CH(CH₃)C₂H₅ | 3 |
| Br | OCH₃ | CH(C₂H₅)₂ | 3 |
| Br | OCH₃ | nC₅H₁₁ | 3 |
| Br | OC₂H₅ | nC₅H₁₁ | 3 |
| Br | OCH₃ | CH(CH₃)nC₃H₇ | 3 |
| Cl | OCH₃ | nC₃H₇ | 3 |
| Cl | OC₂H₅ | nC₃H₇ | 3 |
| Cl | OCH₃ | nC₄H₉ | 3 |
| Cl | OCH₃ | nC₅H₁₁ | 3 |
| Cl | OC₂H₅ | CH(CH₃)C₂H₅ | 3 |
| Cl | OCH₃ | CH(C₂H₅)₂ | 3 |
| Br | H | nC₃H₇ | 4 |
| Br | H | nC₄H₉ | 4 |
| Br | H | nC₅H₁₁ | 4 |
| Br | H | iC₃H₇ | 4 |
| Br | H | CH(CH₃)C₂H₅ | 4 |
| Cl | H | nC₃H₇ | 4 |
| Cl | H | nC₄H₉ | 4 |
| Cl | H | nC₅H₁₁ | 4 |
| Cl | H | CH₂CH(CH₃)₂ | 4 |
| Cl | H | CH(CH₃)nC₃H₇ | 4 |

## Patentansprüche

1. Verfahren zum Färben von Polyester oder polyesterhaltigen Textilmaterialien bei pH 8 bis pH 11, dadurch gekennzeichnet, daß man einen oder mehrere Monoazofarbstoffe der allgemeinen Formel I 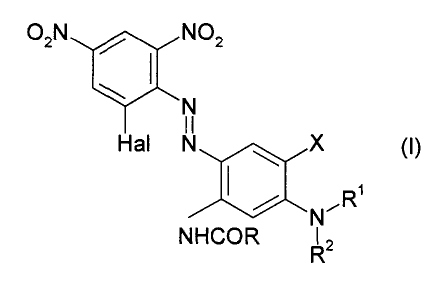 einsetzt, worin
Hal Chlor oder Brom,
R (C₂-C₅)-Alkyl,
x Wasserstoff, Methoxy oder Ethoxy und
R¹ und R² Allyl
bedeuten.

2. Verfahren gemäß Anspruch 1, dadurch gekennzeichnet, daß X Methoxy oder Ethoxy bedeutet.

3. Verfahren gemäß Anspruch 1 und/oder 2, dadurch gekennzeichnet, daß es unter HT-Bedingungen in wäßriger Färbeflotte bei Temperaturen zwischen 120°C und 140°C in einem Färbeautoklaven ausgeführt wird.

4. Verfahren gemäß einem oder mehreren der Ansprüche 1 bis 3, dadurch gekennzeichnet, daß es bei pH 9 bis pH 10 ausgeführt wird.

5. Monoazofarbstoffe der allgemeinen Formel la 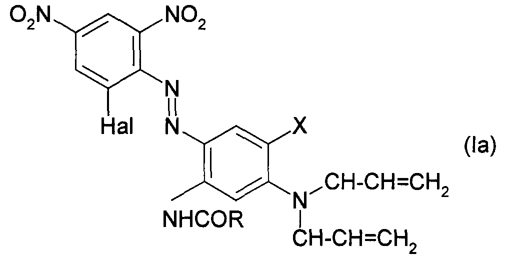 worin
Hal Chlor oder Brom,
R (C₂-C₅)-Alkyl und
x Wasserstoff, Methoxy oder Ethoxy
bedeuten.

6. Mischungen von Monoazofarbstoffen der allgemeinen Formel la gemäß Anspruch 5.

7. Verfahren zur Herstellung von Monoazofarbstoffen der allgemeinen Formel la gemäß Anspruch 5, dadurch gekennzeichnet, daß ein Amin der allgemeinen Formel II 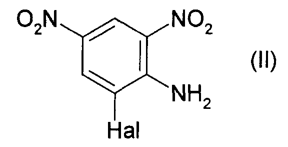 worin Hal wie in Anspruch 5 angegeben definiert ist, in an sich bekannter Weise diazotiert und auf eine Verbindung der allgemeinen Formel III 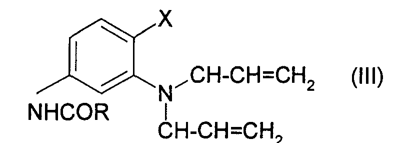 worin R und X wie in Anspruch 5 angegeben definiert sind, gekuppelt wird.

8. Verwendung von Monoazofarbstoffen der allgemeinen Formel la gemäß Anspruch 5 und deren Mischungen gemäß Anspruch 6 zum Färben und Bedrucken von hydrophoben Textilmaterialien.

## Claims

1. A process for dyeing polyester or polyester-containing textile materials at pH 8 to pH 11, characterized in that one or more monoazo dyes of the general formula I 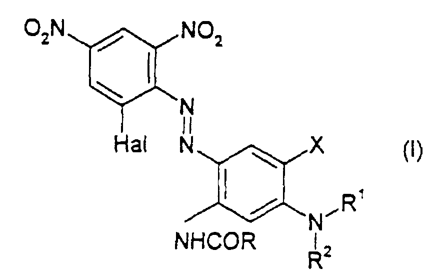 where
Hal is chlorine or bromine,
R is (C₂-C₅)-alkyl,
x is hydrogen, methoxy or ethoxy and
R1 and R2 are allyl
are used.

2. A process as claimed in claim 1, characterized in that X is methoxy or ethoxy.

3. A process as claimed in claim 1 and/or 2, characterized in that it is carried out in an aqueous dyeing liquor in a dyeing autoclave under HT conditions at temperatures between 120°C and 140°C.

4. A process as claimed in one or more of claims 1 to 3, characterized in that it is carried out at pH 9 to pH 10.

5. Monoazo dyes of the general formula Ia 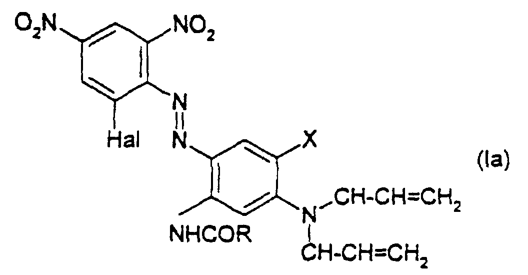 where
Hal is chlorine or bromine,
R is (C₂-C₅)-alkyl and
x is hydrogen, methoxy or ethoxy.

6. Mixtures of monoazo dyes of the general formula Ia as set forth in claim 5.

7. A process for preparing monoazo dyes of the general formula Ia as set forth in claim 5, characterized in that an amine of the general formula II 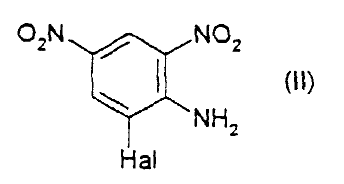 where Hal is as defined in claim 5, is diazotized in a conventional manner and coupled onto a compound of the general formula III 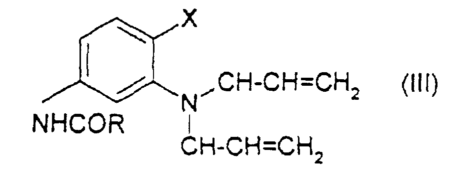 where R and X are each as defined in claim 5.

8. Use of monoazo dyes of the general formula Ia as set forth in claim 5 and of their mixtures as claimed in claim 6 for dyeing and printing hydrophobic textile materials.

## Revendications

1. Procédé de teinture de polyester ou de matières textiles renfermant du polyester entre pH 8 et pH 11, caractérisé en ce que l'on utilise un ou plusieurs colorants monoazoïques de formule générale I 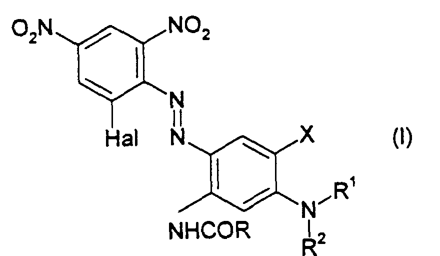 dans laquelle
Hal représente un chlore ou un brome,
R représente un alkyle en C₂-C₅,
x représente un hydrogène, un méthoxy ou un éthoxy
et
R¹ et R² représentent un allyle.

2. Procédé selon la revendication 1, caractérisé en ce que X représente un méthoxy ou un éthoxy.

3. Procédé selon la revendication 1 et/ou 2, caractérisé en ce qu'il est réalisé dans un autoclave de teinture dans des conditions de HT dans un bain de teinture aqueux à des températures comprises entre 120°C et 140°C.

4. Procédé selon l'une ou plusieurs des revendications 1 à 3, caractérisé en ce qu'il est réalisé entre pH 9 et pH 10.

5. Colorants monoazoïques de formule générale Ia 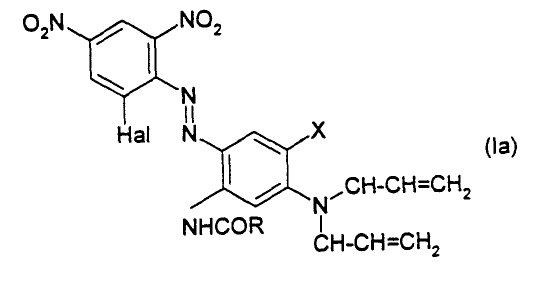 dans laquelle
Hal représente un chlore ou un brome,
R représente un alkyle en C₂-C₅ et
X représente un hydrogène. un méthoxy ou un éthoxy.

6. Mélanges de colorants monoazoïques de formule générale Ia selon la revendication 5.

7. Procédé de préparation de colorants monoazoïques de formule générale Ia selon la revendication 5, caractérisé en ce qu'une amine de formule générale II 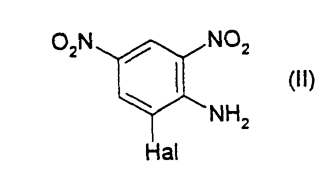 dans laquelle Hal est définie comme indiquée à la revendication 5, est diazotée de manière connue en soi et couplée à un composé de formule générale III 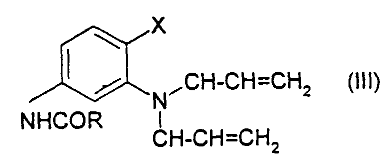 dans laquelle R et X sont définis comme indiqués à la revendication 5.

8. Utilisation de colorants monoazoïques de formule générale Ia selon la revendication 5 et de leurs mélanges selon la revendication 6 pour la teinture et l'impression de matières textiles hydrophobes.
